# EUROPÄISCHE PATENTSCHRIFT

(11) **EP 3 329 105 B1**
(45) Veröffentlichungstag und Bekanntmachung des Hinweises auf die Patenterteilung: **21.11.2018**
(21) Anmeldenummer: 17784641.7
(22) Anmeldetag: 16.10.2017
(51) Int. Cl.: F01M 13/00, F02M 25/00, F01M 13/02, F01M 13/04, F02D 41/00, F02M 26/06, F02M 26/00

(54) **ABSCHEIDEVORRICHTUNG, MOTORVORRICHTUNG UND ABSCHEIDEVERFAHREN**
SEPARATOR, ENGINE AND SEPARATION PROCEDURE
SEPARATEUR, MOTEUR ET PROCÉDÉ DE SÉPARATION

(30) Priorität: 21.10.2016 DE 102016220770
(43) Veröffentlichungstag der Anmeldung: 06.06.2018
(73) Patentinhaber: ElringKlinger AG, 72581 Dettingen/Erms (DE); Bayerische Motoren Werke Aktiengesellschaft, 80809 München (DE)
(72) Erfinder: DWENGER, Stefan, 72762 Reutlingen (DE); ENNE, Roman, 4441 Behamberg (AT)
(74) Vertreter: Hoeger, Stellrecht & Partner Patentanwälte mbB
(86) Internationale Anmeldenummer: PCT/EP2017/076386
(87) Internationale Veröffentlichungsnummer: WO 2018/073194

(56) Entgegenhaltungen:
- EP-A1- 2 775 111
- EP-A1- 2 913 492
- EP-A2- 3 020 935
- DE-A1-102007 035 355
- DE-T5-112011 105 854
- JP-A- 2009 133 292

## Beschreibung

Die vorliegende Erfindung betrifft eine Abscheidevorrichtung zur Abscheidung von Verunreinigungen aus einem Rohgasstrom, insbesondere zur Abscheidung von Ölnebel aus einem ölnebelhaltigen Blowby-Gasstrom eines Verbrennungsmotors. Eine solche Abscheidevorrichtung kann insbesondere in einer Motorvorrichtung zum Einsatz kommen. Vorzugsweise ist mittels der Abscheidevorrichtung ein Abscheideverfahren durchführbar. EP 3 020 935 offenbart eine solche Vorrichtung.

Der vorliegenden Erfindung liegt die Aufgabe zugrunde, eine Motorvorrichtung mit einer Abscheidevorrichtung bereitzustellen, welche einfach aufgebaut und zuverlässig sowie effizient betreibbar ist.

Diese Aufgabe wird erfindungsgemäß durch eine Motorvorrichtung gemäß dem unabhängigen Vorrichtungsanspruch gelöst.

Die Abscheidevorrichtung zur Abscheidung von Verunreinigungen aus einem Rohgasstrom, insbesondere zur Abscheidung von Ölnebel aus einem ölnebelhaltigen Blowby-Gasstrom eines Verbrennungsmotors, umfasst vorzugsweise Folgendes:
mindestens einen Abscheidekörper zur Abscheidung der Verunreinigungen; eine Ejektorvorrichtung zur Erzeugung eines Saugeffekts an einer Austrittsseite des mindestens einen Abscheidekörpers;
eine Zuführvorrichtung zur Zuführung eines Treibmediums zu der Ejektorvorrichtung, wobei mittels der Zuführvorrichtung wahlweise a) komprimierte Zuluft aus einem Zuluftstrang des Verbrennungsmotors, b) Abgas aus einem Abgasstrang des Verbrennungsmotors c) ein Gemisch aus komprimierter Zuluft und Abgas als Treibmedium zu der Ejektorvorrichtung zuführbar ist.

Komprimierte Zuluft ist insbesondere Zuluft eines Zuluftstrangs des Verbrennungsmotors, welche aus einer Zuluftleitung des Zuluftstrangs abgezweigt ist, insbesondere bezüglich einer Strömungsrichtung der Zuluft zwischen einer Kompressorvorrichtung und Brennräumen des Verbrennungsmotors.

Das Abgas ist insbesondere ein aus einer Abgasleitung des Abgasstrangs des Verbrennungsmotors abgezweigtes Abgas.

Die Ejektorvorrichtung ist vorzugsweise eine Strahlpumpe, insbesondere eine Saugstrahlpumpe.

Mittels der Ejektorvorrichtung kann vorzugsweise ein zur Abscheidung mittels des Abscheidekörpers benötigtes Druckgefälle erhöht werden.

Es kann vorgesehen sein, dass die Zuführvorrichtung eine Steuerungsvorrichtung umfasst.

Die Steuerungsvorrichtung ist zur Steuerung und/oder Regelung der Zuführvorrichtung vorzugsweise derart ausgebildet und eingerichtet, dass das Treibmedium abhängig von unterschiedlichen Betriebszuständen des Verbrennungsmotors wählbar ist.

Vorzugsweise ist das Treibmedium hinsichtlich seiner Zusammensetzung und/oder seines Volumenstroms einstellbar, insbesondere steuerbar und/oder regelbar.

Beispielsweise kann abhängig von unterschiedlichen Betriebszuständen des Verbrennungsmotors ein unterschiedliches Mischungsverhältnis aus Zuluft und Abgas gewählt, eingestellt, gesteuert und/oder geregelt werden.

Bei einer Ausgestaltung der Erfindung kann vorgesehen sein, dass mittels der Steuerungsvorrichtung aufgrund von und/oder abhängig von herrschenden Druckdifferenzen zwischen einem Druck im Zuluftstrang einerseits und einem Druck im Abgasstrang andererseits steuerbar und/oder regelbar ist, ob und/oder mit welchem Volumengasstrom Abgas als Treibmedium zu der Ejektorvorrichtung zugeführt wird.

Die Steuerungsvorrichtung steuert dabei insbesondere eine Ventilvorrichtung, insbesondere ein Ventil, eine Klappe, ein Regelventil, eine Drossel, etc.

Eine Ventilvorrichtung ist in dieser Beschreibung und den beigefügten Ansprüchen insbesondere eine Vorrichtung, mittels welcher ein Volumenstrom des Abgases und/oder der Zuluft variiert, insbesondere vergrößert, verkleinert, vollständig blockiert oder vollständig freigegeben werden kann. Ferner kann mittels einer Ventilvorrichtung vorzugsweise eine Strömungsumlenkung oder Umleitung erfolgen.

Der Druck im Zuluftstrang ist vorzugsweise ein Druck stromabwärts einer Kompressionsvorrichtung des Zuluftstrangs und/oder stromaufwärts von Brennräumen der Verbrennungsvorrichtung.

Es kann jedoch auch vorgesehen sein, dass der Druck im Zuluftstrang, welcher als Eingangsparameter für die Steuerungsvorrichtung genutzt wird, ein Druck stromaufwärts der Kompressorvorrichtung des Zuluftstrangs ist.

Der Druck im Abgasstrang ist vorzugsweise ein Druck stromabwärts einer Turbinenvorrichtung und/oder stromabwärts einer Katalysatorvorrichtung des Abgasstrangs und/oder stromabwärts eines Partikelfilters des Abgasstrangs.

Alternativ oder ergänzend hierzu kann vorgesehen sein, dass der Druck im Abgasstrang ein Druck stromaufwärts einer Kühlvorrichtung einer Niederdruck-Abgasrückführung, stromaufwärts eines Partikelfilters; stromaufwärts einer Katalysatorvorrichtung und/oder stromaufwärts einer Turbinenvorrichtung des Abgasstrangs ist.

Günstig kann es sein, wenn die Steuerungsvorrichtung eine aktive Steuerungsvorrichtung ist, welche aktiv, insbesondere sensorgesteuert, elektrisch, mechanisch und/oder pneumatisch, auf eine Ventilvorrichtung der Zuführvorrichtung einwirkt.

Bei einer aktiven Steuerungsvorrichtung ist insbesondere keine unmittelbare mechanische Betätigung der Ventilvorrichtung aufgrund herrschender Druckdifferenzen vorgesehen. Vielmehr ist die Ventilvorrichtung bei der Verwendung einer aktiven Steuerungsvorrichtung vorzugsweise grundsätzlich unabhängig von herrschenden Druckniveaus betätigbar.

Es kann jedoch auch vorgesehen sein, dass die Steuerungsvorrichtung eine passive Steuerungsvorrichtung ist, bei welcher eine Betätigung der Ventilvorrichtung mechanisch und unmittelbar aufgrund herrschender Druckniveaus erfolgt.

Eine solche Steuerungsvorrichtung ist insbesondere gemeinsam mit der Ventilvorrichtung ausgebildet, beispielsweise als ein automatisches Schaltelement, welches insbesondere keine externe Ansteuerung aufweist und vorzugsweise lediglich aufgrund von herrschenden Druckniveaus und/oder Druckdifferenzen einen Volumenstrom, insbesondere einen Abgasvolumenstrom, freigibt, erhöht, reduziert oder blockiert.

Insbesondere ist bei einer passiven Steuerungsvorrichtung keine ECUabhängige Ansteuerung erforderlich.

Es kann vorgesehen sein, dass die Steuerungsvorrichtung ein oder mehrere Sensorelemente, insbesondere Manometer, zur Bereitstellung von aktuellen Messwerten umfasst. Die Zuführvorrichtung ist vorzugsweise abhängig von diesen Messwerten mittels der Steuerungsvorrichtung regelbar.

Ein Sensorelement ist vorzugsweise stromaufwärts der Kompressionsvorrichtung angeordnet.

Alternativ oder ergänzend hierzu kann vorgesehen sein, dass ein Sensorelement stromabwärts der Kompressionsvorrichtung und/oder stromaufwärts von Brennräumen des Verbrennungsmotors angeordnet ist.

Alternativ oder ergänzend hierzu kann vorgesehen sein, dass ein Sensorelement stromabwärts von Brennräumen des Verbrennungsmotors angeordnet ist.

Günstig kann es sein, wenn ein Sensorelement bezüglich einer Strömungsrichtung des Abgases im Abgasstrang zwischen Brennräumen des Verbrennungsmotors einerseits und einer Turbinenvorrichtung andererseits angeordnet ist.

Alternativ oder ergänzend hierzu kann vorgesehen sein, dass ein Sensorelement bezüglich einer Strömungsrichtung des Abgases im Abgasstrang zwischen einer Turbinenvorrichtung und einer Katalysatorvorrichtung des Abgasstrangs angeordnet ist.

Ferner kann alternativ oder ergänzend hierzu vorgesehen sein, dass ein Sensorelement bezüglich einer Strömungsrichtung des Abgases im Abgasstrang zwischen einer Katalysatorvorrichtung und einem Partikelfilter des Abgasstrangs angeordnet ist.

Es kann vorgesehen sein, dass ein Sensorelement bezüglich einer Strömungsrichtung des Abgases im Abgasstrang zwischen einem Partikelfilter und einer Abgasrückführungsvorrichtung, insbesondere einer Niederdruck-Abgasrückführung, angeordnet ist.

Vorteilhaft kann es sein, wenn der Abgasstrang eine Stauklappe zum Stauen des Abgases aufweist, insbesondere um einen Abgasdruck im Abgasstrang zu erhöhen.

Ein Sensorelement ist vorzugsweise unmittelbar stromaufwärts einer solchen Stauklappe angeordnet.

Ferner kann vorgesehen sein, dass ein Sensorelement stromabwärts einer Kühlvorrichtung einer Abgasrückführungsvorrichtung im Abgasstrang angeordnet ist, insbesondere vor einer Zuleitung des rückgeführten Abgases zu einem Zuluftstrang.

Der Abscheidekörper ist vorzugsweise ein Vlies-Abscheider oder umfasst einen Vlies-Abscheider.

Günstig kann es sein, wenn der Abscheidekörper ein passiver Abscheider ist oder einen passiven Abscheider umfasst.

Der Abscheidekörper kann ferner einen Prallplattenabscheider, einen Zyklon, einen Impaktor oder ähnliches umfassen oder als ein solcher ausgebildet sein.

Es kann vorgesehen sein, dass der Abscheidekörper als ein Impaktor-Vlies-Abscheider ausgebildet ist.

Bei einer Ausgestaltung der Erfindung kann vorgesehen sein, dass das als Treibmedium dienende Abgas stromabwärts von Brennräumen des Verbrennungsmotors, stromabwärts einer Turbinenvorrichtung des Abgasstrangs, stromabwärts einer Katalysatorvorrichtung des Abgasstrangs, stromabwärts eines Partikelfilters des Abgasstrangs und/oder stromabwärts einer Kühlvorrichtung einer Abgasrückführungsvorrichtung des Verbrennungsmotors aus dem Abgasstrang abgezweigt wird.

Alternativ oder ergänzend hierzu kann vorgesehen sein, dass das als Treibmedium dienende Abgas stromaufwärts einer Turbinenvorrichtung des Abgasstrangs, stromaufwärts einer Katalysatorvorrichtung des Abgasstrangs, stromaufwärts eines Partikelfilters des Abgasstrangs und/oder stromaufwärts einer Kühlvorrichtung einer Abgasrückführungsvorrichtung des Verbrennungsmotors aus dem Abgasstrang abgezweigt wird.

Die komprimierte Zuluft aus dem Zuluftstrang und das Abgas aus dem Abgasstrang werden vorzugsweise vor der Zuführung zu der Ejektorvorrichtung miteinander vermischt. Die Abscheidevorrichtung umfasst hierzu vorzugsweise eine Zusammenführungsvorrichtung zur Zusammenführung und/oder zum Vermischen der Zuluft mit dem Abgas.

Die Zusammenführungsvorrichtung mündet insbesondere in die Ejektorvorrichtung.

Vorteilhaft kann es sein, wenn zwischen dem Zuluftstrang einerseits und der Ejektorvorrichtung andererseits ein Rückschlagventil angeordnet ist. Alternativ oder ergänzend hierzu kann vorgesehen sein, dass zwischen dem Abgasstrang einerseits und der Ejektorvorrichtung andererseits ein Rückschlagventil vorgesehen ist.

Insbesondere durch die Verwendung zweier Rückschlagventile kann vorzugsweise ein Übertritt von Abgas in den Zuluftstrang und/oder von Zuluft in den Abgasstrang verhindert werden.

Vorzugsweise wird bei der Abscheidevorrichtung Abgas aus einer Niederdruck-Abgasrückführung zum Antrieb der Ejektorvorrichtung genutzt, insbesondere zur Ergänzung eines zum Betrieb der Ejektorvorrichtung genutzten Zuluftstroms.

Insbesondere durch die Verwendung von Düsen und/oder Bohrungen kann vorzugsweise eine Limitierung des Massenstroms des Abgases in der Niederdruck-Abgasrückführung und/oder eine Limitierung des Massenstroms im Zuluftstrang erzielt werden.

Vorzugsweise ergeben sich Wirkungsgradvorteile im Betrieb der Abscheidevorrichtung durch die Verwendung einer Ejektorvorrichtung sowie durch die Verwendung von Abgas aus der Niederdruck-Abgasrückführung.

Insbesondere dann, wenn Abgas aus dem Abgasstrang stromabwärts einer Turbinenvorrichtung abgezweigt wird, kann ein vollständiger Abgasmassenstrom von den Brennräumen zu der Turbinenvorrichtung zugeführt und somit die maximal verfügbare Energie genutzt werden.

Ferner kann vorzugsweise durch die Verwendung von Abgas aus der Niederdruck-Abgasrückführung vermieden werden, dass komprimierte Zuluft (Ladeluft) abgezweigt wird und somit lediglich eine geringere Ladeluftmenge (Massenstrom der komprimierten Zuluft) für die Verbrennung in den Brennräumen zur Verfügung steht.

Die vorliegende Erfindung betrifft eine Motorvorrichtung, welche einen Verbrennungsmotor und eine Abscheidevorrichtung erfasst.

Günstig kann es sein, wenn die Motorvorrichtung zusätzlich zu der Abscheidevorrichtung eine oder mehrere oder sämtliche der folgenden Komponenten umfasst:
eine Turboladervorrichtung, welche insbesondere eine Turbinenvorrichtung und eine Kompressionsvorrichtung umfasst;
eine Kompressorvorrichtung, welche eine Kompressionsvorrichtung umfasst; eine Katalysatorvorrichtung;
einen Partikelfilter; und/oder
eine Abgasrückführungsvorrichtung, insbesondere eine Niederdruck-Abgasrückführung.

Die erfindungsgemäße Motorvorrichtung weist vorzugsweise einzelne oder mehrere der im Zusammenhang mit der Abscheidevorrichtung beschriebenen Merkmale und/oder Vorteile auf.

Vorzugsweise weist die Motorvorrichtung eine Drossel, eine Stauklappe und/oder eine Ventilvorrichtung auf, mittels welcher ein Druck im Abgasstrang erhöht werden kann, beispielsweise um mindestens ungefähr 100 mbar, vorzugsweise um mindestens ungefähr 200 mbar.

Durch Abzweigen von Abgas, insbesondere aus der Niederdruck-Abgasrückführung, kann somit vorzugsweise ein ausreichender Druck zum Betrieb der Ejektorvorrichtung bereitgestellt werden.

Die Abzweigung des Abgases in der Niederdruck-Abgasrückführung kann stromaufwärts oder stromabwärts einer Kühlvorrichtung der Niederdruck-Abgasrückführung erfolgen.

Die Abscheidevorrichtung ist insbesondere derart an den Verbrennungsmotor angekoppelt, dass Kurbelgehäusegas aus dem Verbrennungsmotor absaugbar und zur Entfernung von Ölnebel aus dem Kurbelgehäusegas durch die Abscheidevorrichtung hindurchführbar ist.

Die Abscheidevorrichtung dient somit insbesondere der Kurbelgehäuseentlüftung.

Die vorliegende Erfindung betrifft ferner ein Abscheideverfahren zur Abscheidung von Verunreinigungen aus einem Rohgasstrom.

Der vorliegenden Erfindung liegt diesbezüglich die Aufgabe zugrunde, ein Abscheideverfahren bereitzustellen, welches einfach, zuverlässig und effizient durchführbar ist.

Diese Aufgabe wird erfindungsgemäß durch ein Abscheideverfahren gemäß dem unabhängigen Verfahrensanspruch gelöst.

Das erfindungsgemäße Abscheideverfahren weist vorzugsweise einzelne oder mehrere der im Zusammenhang mit der Abscheidevorrichtung und/oder der erfindungsgemäßen Motorvorrichtung beschriebenen Merkmale und/oder Vorteile auf.

Ferner kann vorgesehen sein, dass die Abscheidevorrichtung und/oder die erfindungsgemäße Motorvorrichtung einzelne oder mehrere der im

Zusammenhang mit dem erfindungsgemäßen Abscheideverfahren beschriebenen Merkmale und/oder Vorteile aufweisen.

Das Abscheideverfahren dient insbesondere zur Abscheidung von Ölnebel aus einem ölnebelhaltigen Blowby-Gasstrom eines Verbrennungsmotors. Insbesondere ist das Abscheideverfahren unter Verwendung einer Abscheidevorrichtung, vorzugsweise einer erfindungsgemäßen Motorvorrichtung, durchführbar.

Das Abscheideverfahren umfasst vorzugsweise Folgendes:
Zuführen eines Treibmediums zu einer Ejektorvorrichtung, wobei wahlweise
   a) komprimierte Zuluft aus einem Zuluftstrang des Verbrennungsmotors,
   b) Abgas aus einem Abgasstrang des Verbrennungsmotors
   c) ein Gemisch aus komprimierter Zuluft und Abgas
   als Treibmedium zu der Ejektorvorrichtung zugeführt wird;
Absaugen und/oder Ansaugen des Rohgasstroms mittels der Ejektorvorrichtung, wobei und/oder wodurch der Rohgasstrom durch einen Abscheidekörper hindurchströmt und Verunreinigungen an und/oder in dem Abscheidekörper abgeschieden werden.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer ersten Ausführungsform einer Motorvorrichtung mit einer ersten Ausführungsform einer Abscheidevorrichtung; und
- Fig. 2: eine schematische Darstellung einer zweiten Ausführungsform einer Motorvorrichtung mit einer zweiten Ausführungsform einer Abscheidevorrichtung.

Gleiche oder funktional äquivalente Elemente sind in sämtlichen Figuren mit denselben Bezugszeichen versehen.

Eine in Fig. 1 dargestellte erste Ausführungsform einer als Ganzes mit 100 bezeichneten Motorvorrichtung umfasst einen Verbrennungsmotor 102, beispielsweise einen Hubkolbenmotor eines Kraftfahrzeugs, insbesondere eines Personenkraftwagens oder Lastkraftwagens.

Im Betrieb des Verbrennungsmotors 102 können sich in dessen Innenraum, insbesondere in einem Kurbelgehäuse des Verbrennungsmotors 102, verunreinigte Gase bilden. Insbesondere kann dies ein ölnebelhaltiges Blowby-Gas sein.

Dieses ölnebelhaltige Blowby-Gas muss aus dem Verbrennungsmotor 102 abgeführt und gereinigt werden.

Auf das ölnebelhaltige Blowby-Gas wird nachfolgend verallgemeinernd als ein Rohgasstrom Bezug genommen. Der Ölnebel bildet dabei Verunreinigungen des Rohgasstroms.

Zur Reinigung des Rohgasstroms, insbesondere zum Entfernen der Verunreinigungen aus dem Rohgasstrom, umfasst die Motorvorrichtung 100 eine Abscheidevorrichtung 104.

Die Abscheidevorrichtung 104 umfasst insbesondere einen Abscheidekörper 106, welcher mit dem Rohgasstrom durchströmt wird, um die Verunreinigungen aus dem Rohgasstrom zu entfernen.

Der Abscheidekörper 106 ist insbesondere ein Vlies-Abscheider 108, beispielsweise ein Impaktor-Vlies-Abscheider.

Beim Durchströmen der Abscheidevorrichtung 104 mit dem Rohgasstrom ergibt sich eine Druckdifferenz im Rohgasstrom, insbesondere zwischen einem

Druck am Einlass des Abscheidekörpers 106 und einem Druck am Auslass des Abscheidekörpers 106.

Durch eine größere Druckdifferenz kann bei geeigneter Ausgestaltung des Abscheidekörpers 106 die Abscheideeffizienz erhöht werden.

Die Abscheidevorrichtung 104 umfasst hierzu eine Ejektorvorrichtung 110, welche bezüglich einer Strömungsrichtung des Rohgasstroms vorzugsweise stromabwärts des Abscheidekörpers 106 angeordnet ist und einen Saugeffekt zum Ansaugen des Rohgasstroms an einer Austrittsseite des Abscheidekörpers 106 bewirkt.

Die Ejektorvorrichtung 110 ist insbesondere eine Saugstrahlpumpe oder umfasst eine solche Saugstrahlpumpe. Dabei ist vorgesehen, dass der Rohgasstrom als ein Saugmedium mittels der Ejektorvorrichtung 110 angesaugt wird.

Ein zur Erzeugung des Saugeffekts erforderliches Treibmedium wird beispielsweise durch Zuluft und/oder Abgas gebildet.

Insbesondere wird hierfür Zuluft aus einem Zuluftstrang 112 der Motorvorrichtung 100 und/oder Abgas aus einem Abgasstrang 114 der Motorvorrichtung 100 abgezweigt und als Treibmedium zu der Ejektorvorrichtung 110 zugeführt.

Nachfolgend wird zunächst auf die Details des Zuluftstrangs 112 sowie des Abgasstrangs 114 näher eingegangen, bevor im Anschluss daran die Ejektorvorrichtung 110 erneut detaillierter beschrieben wird.

Der Zuluftstrang 112 dient der Zuführung von Zuluft, insbesondere Frischluft, zu Brennräumen 116 des Verbrennungsmotors 102.

Der Verbrennungsmotor 102 kann dabei beispielsweise ein reiner Saugmotor sein.

Es kann jedoch auch vorgesehen sein, dass der Verbrennungsmotor 102 ein aufgeladener Motor ist.

Insbesondere kann vorgesehen sein, dass die Motorvorrichtung 100 eine Turboladervorrichtung 118 umfasst.

Eine solche Turboladervorrichtung 118 umfasst insbesondere eine Kompressionsvorrichtung 120, welche Bestandteil des Zuluftstrangs 112 ist, sowie eine Turbinenvorrichtung 122, welche Bestandteil des Abgasstrangs 114 ist.

Alternativ zu einer Turboladervorrichtung 118 kann auch eine Kompressorvorrichtung vorgesehen sein. In diesem Fall umfasst die Motorvorrichtung 100 dann lediglich eine Kompressionsvorrichtung 120, welche Bestandteil des Zuluftstrangs 112 ist. Eine Turbinenvorrichtung 122 ist bei einer solchen Kompressorvorrichtung nicht vorgesehen.

Der Abgasstrang 114 dient insbesondere der Abführung von Abgas aus den Brennräumen 116 des Verbrennungsmotors 102 sowie der Reinigung des Abgases und der Energierückgewinnung.

Der Abgasstrang 114 umfasst vorzugsweise die Turbinenvorrichtung 122, eine Katalysatorvorrichtung 124, einen Partikelfilter 126 und/oder eine Abgasrückführungsvorrichtung 128.

Ferner kann eine Stauklappe 130 Bestandteil des Abgasstrangs 114 sein.

Die Katalysatorvorrichtung 124 ist insbesondere eine Dieseloxidationskatalysatorvorrichtung und/oder eine Speicherkatalysatorvorrichtung zur Stickoxidspeicherung.

Der Partikelfilter 126 ist insbesondere ein Dieselpartikelfilter.

Die Abgasrückführungsvorrichtung 128 ist insbesondere eine Niederdruck-Abgasrückführung 132.

Vorzugsweise umfasst die Abgasrückführungsvorrichtung 128 eine Kühlvorrichtung 134 zum Kühlen des rückzuführenden Abgases.

Mittels der Abgasrückführungsvorrichtung 128 ist insbesondere Abgas aus dem Abgasstrang 114 entnehmbar und dem Zuluftstrang 112 zuführbar.

Die Abscheidevorrichtung 104, insbesondere die Ejektorvorrichtung 110, ist vorzugsweise einerseits an den Zuluftstrang 112 und andererseits an den Abgasstrang 114 angekoppelt.

Insbesondere ist dabei vorzugsweise eine Zuführvorrichtung 136 der Abscheidevorrichtung 104 vorgesehen, mittels welcher einerseits Zuluft aus dem Zuluftstrang 112 abzweigbar sowie als Treibmedium der Ejektorvorrichtung 110 zuführbar und andererseits Abgas aus dem Abgasstrang 114 abzweigbar und als Treibmedium der Ejektorvorrichtung 110 zuführbar ist.

Mittels der Zuführvorrichtung 136 ist insbesondere abhängig von unterschiedlichen Betriebszuständen der Motorvorrichtung 100 gewährleistet, dass ein Druck und/oder ein Volumenstrom des zum Betrieb der Ejektorvorrichtung 110 erforderlichen Treibmediums stets ausreichend hoch ist. Insbesondere kann mittels der Zuführvorrichtung 136 somit eine zuverlässige Kurbelgehäuseentlüftung gewährleistet werden, vorzugsweise unbeeinträchtigt von den unterschiedlichen Betriebszuständen des Verbrennungsmotors 102.

Die Zuführvorrichtung 136 umfasst vorzugsweise ein oder mehrere Rückschlagventile 138, welche ein unerwünschtes Zurückströmen von Zuluft zu dem Zuluftstrang 112 und/oder Abgas zu dem Abgasstrang 114 vermeiden.

Insbesondere kann mittels des Rückschlagventils 138 oder mittels der Rückschlagventile 138 vorzugsweise ein unerwünschtes Überströmen von Abgas in den Zuluftstrang 112 und/oder von Zuluft in den Abgasstrang 114 vermieden werden.

Bezüglich einer Strömungsrichtung 140 der Zuluft im Zuluftstrang 112 ist eine Abzweigung 142 zur Abzweigung von Zuluft aus dem Zuluftstrang 112 vorzugsweise stromabwärts der Kompressionsvorrichtung 120 angeordnet.

Mittels der Zuführvorrichtung 136 kann somit über die Abzweigung 142 vorzugsweise komprimierte Zuluft abgezweigt und als Treibmedium zu der Ejektorvorrichtung 110 zugeführt werden.

Auch im Abgasstrang 114 ist vorzugsweise mindestens eine Abzweigung 142 angeordnet. Bezüglich einer Strömungsrichtung 140 des Abgases im Abgasstrang 114 ist dabei eine Abzweigung 142 vorzugsweise zwischen den Brennräumen 116 und der Turbinenvorrichtung 122 angeordnet.

Alternativ oder ergänzend hierzu kann vorgesehen sein, dass eine (weitere) Abzweigung 142 bezüglich der Strömungsrichtung 140 des Abgases im Abgasstrang 114 zwischen der Katalysatorvorrichtung 124 und dem Partikelfilter 126 angeordnet ist.

Über die eine oder die beiden Abzweigungen 142 kann somit Abgas aus dem Abgasstrang 114 abgezweigt und über die Zuführvorrichtung 136 als Treibmedium zu der Ejektorvorrichtung 110 zugeführt werden.

Abhängig von dem jeweiligen Betriebszustand des Verbrennungsmotors 102 kann wahlweise nur komprimierte Zuluft, nur Abgas oder sowohl Zuluft als auch Abgas als Treibmedium für die Ejektorvorrichtung 110 genutzt werden.

Die Wahl der Volumenströme des als Treibmedium verwendeten Abgases und/oder der als Treibmedium verwendeten Zuluft wird vorzugsweise mittels einer Steuerungsvorrichtung 144 der Abscheidevorrichtung 104 getroffen. Die Steuerungsvorrichtung 144 kann dabei beispielsweise eine aktive Steuerungsvorrichtung 144 sein.

Bei einer solchen aktiven Steuerungsvorrichtung 144 ist insbesondere die Verwendung von einem oder mehreren Sensorelementen 146 vorgesehen, um verschiedene Messwerte, insbesondere Druckmesswerte, im Zuluftstrang 112 und/oder im Abgasstrang 114 ermitteln zu können. Abhängig von den ermittelten Messwerten wird dann vorzugsweise auf eine Ventilvorrichtung 148 der Abscheidevorrichtung 104 Einfluss genommen.

Mittels der Ventilvorrichtung 148 kann insbesondere eine Fluidverbindung zwischen dem Abgasstrang 114 und der Ejektorvorrichtung 110 hergestellt werden, um Abgas als Treibmedium nutzen zu können, wenn in unterschiedlichen Betriebsmodi des Verbrennungsmotors 102 beispielsweise der Druck im Zuluftstrang 112 zu gering ist.

Es kann jedoch auch vorgesehen sein, dass die Steuerungsvorrichtung 144 eine passive Steuerungsvorrichtung 144 ist.

Bei einer solchen passiven Steuerungsvorrichtung 144 wird vorzugsweise eine druckwirksame Kopplung zwischen dem Zuluftstrang 112, dem Abgasstrang 114 und/oder einem Schaltelement 150 hergestellt. Mittels des Schaltelements 150 kann dann insbesondere abhängig von Druckdifferenzen zwischen dem Druck im Zuluftstrang 112 und dem Druck im Abgasstrang 114 selbsttätig mechanisch und ohne aufwendige elektronische Regelung oder Steuerung Einfluss auf den als Treibmedium genutzten Abgasvolumenstrom genommen werden.

Eine in Fig. 2 dargestellte zweite Ausführungsform einer Motorvorrichtung 100 unterscheidet sich von der in Fig. 1 dargestellten ersten Ausführungsform im Wesentlichen lediglich durch die Art der Einbindung der Abscheidevorrichtung 104, insbesondere der Ejektorvorrichtung 110.

Bei der in Fig. 2 dargestellten Ausführungsform der Motorvorrichtung 100 ist vorgesehen, dass als Treibmedium verwendetes Abgas zum Betrieb der Ejektorvorrichtung 110 stromabwärts einer Kühlvorrichtung 134 der Niederdruck-Abgasrückführung 132 abgezweigt wird. Insbesondere dann, wenn die Motorvorrichtung 100 als Ganzes einen Betrieb mit stark geschlossener Stauklappe 130 und folglich hohem Druck in der Abgasrückführungsvorrichtung 128 ermöglicht, kann dann einfach und effizient der zum Betrieb der Ejektorvorrichtung 110 benötigte Treibmediumstrom bereitgestellt werden.

Im Übrigen stimmt die in Fig. 2 dargestellte zweite Ausführungsform der Motorvorrichtung 100 hinsichtlich Aufbau und Funktion mit der in Fig. 1 dargestellten ersten Ausführungsform überein, so dass auf deren vorstehende Beschreibung insoweit Bezug genommen wird.

## Patentansprüche

1. Motorvorrichtung (100), umfassend einen Verbrennungsmotor (102) und eine Abscheidevorrichtung (104) zur Abscheidung von Verunreinigungen aus einem Rohgasstrom, insbesondere zur Abscheidung von Ölnebel aus einem ölnebelhaltigen Blowby-Gasstrom des Verbrennungsmotors (102), wobei die Abscheidevorrichtung (104) Folgendes umfasst:
- mindestens einen Abscheidekörper (106) zur Abscheidung der Verunreinigungen;
- eine Ejektorvorrichtung (110) zur Erzeugung eines Saugeffekts an einer Austrittsseite des mindestens einen Abscheidekörpers (106);
- eine Zuführvorrichtung (136) zur Zuführung eines Treibmediums zu der Ejektorvorrichtung (110), wobei mittels der Zuführvorrichtung (136) wahlweise a) komprimierte Zuluft aus einem Zuluftstrang (112) des Verbrennungsmotors (102), b) Abgas aus einem Abgasstrang (114) des Verbrennungsmotors (102) c) ein Gemisch aus komprimierter Zuluft und Abgas als Treibmedium zu der Ejektorvorrichtung (110) zuführbar ist.

2. Motorvorrichtung (100) nach Anspruch 1, **dadurch gekennzeichnet, dass** die Zuführvorrichtung (136) eine Steuerungsvorrichtung (144) umfasst, welche zur Steuerung und/oder Regelung der Zuführvorrichtung (136) derart ausgebildet und eingerichtet ist, dass das Treibmedium abhängig von unterschiedlichen Betriebszuständen des Verbrennungsmotors (102) wählbar ist, insbesondere hinsichtlich Zusammensetzung und/oder Volumenstrom einstellbar ist.

3. Motorvorrichtung (100) nach Anspruch 2, **dadurch gekennzeichnet, dass** mittels der Steuerungsvorrichtung (144) aufgrund von und/oder abhängig von herrschenden Druckdifferenzen zwischen einem Druck im Zuluftstrang (112) einerseits und einem Druck im Abgasstrang (114) andererseits steuerbar und/oder regelbar ist, ob und/oder mit welchem Volumenstrom Abgas als Treibmedium zu der Ejektorvorrichtung (110) zugeführt wird.

4. Motorvorrichtung (100) nach Anspruch 3, **dadurch gekennzeichnet, dass** der Druck im Zuluftstrang (112) ein Druck stromabwärts einer Kompressionsvorrichtung (120) des Zuluftstrangs (112) ist.

5. Motorvorrichtung (100) nach einem der Ansprüche 3 oder 4, **dadurch gekennzeichnet, dass** der Druck im Abgasstrang (114) ein Druck stromabwärts einer Turbinenvorrichtung (122) und/oder stromabwärts einer Katalysatorvorrichtung (124) des Abgasstrangs (114) ist.

6. Motorvorrichtung (100) nach einem der Ansprüche 3 oder 4, **dadurch gekennzeichnet, dass** der Druck im Abgasstrang (114) ein Druck stromaufwärts einer Turbinenvorrichtung (122) des Abgasstrangs (114) ist.

7. Motorvorrichtung (100) nach einem der Ansprüche 1 bis 6, **dadurch gekennzeichnet, dass** die Steuerungsvorrichtung (144) eine aktive Steuerungsvorrichtung (144) ist, welche aktiv, insbesondere sensorgesteuert, elektrisch, mechanisch und/oder pneumatisch, auf eine Ventilvorrichtung (148) der Zuführvorrichtung (136) einwirkt.

8. Motorvorrichtung (100) nach einem der Ansprüche 1 bis 6, **dadurch gekennzeichnet, dass** die Steuerungsvorrichtung (144) eine passive Steuerungsvorrichtung (144) ist, bei welcher eine Betätigung der Ventilvorrichtung (148) mechanisch und unmittelbar aufgrund herrschender Druckniveaus erfolgt.

9. Motorvorrichtung (100) nach einem der Ansprüche 1 bis 8, **dadurch gekennzeichnet, dass** die Steuerungsvorrichtung (144) ein oder mehrere Sensorelemente (146), insbesondere Manometer, zur Bereitstellung von aktuellen Messwerten umfasst, wobei die Zuführvorrichtung (136) mittels der Steuerungsvorrichtung (144) abhängig von diesen Messwerten regelbar ist.

10. Motorvorrichtung (100) nach einem der Ansprüche 1 bis 9, **dadurch gekennzeichnet, dass** der Abscheidekörper (106) ein Vlies-Abscheider (108) ist oder einen Vlies-Abscheider (108) umfasst.

11. Motorvorrichtung (100) nach einem der Ansprüche 1 bis 10, **dadurch gekennzeichnet, dass** das als Treibmedium dienende Abgas
a) stromabwärts von Brennräumen (116) des Verbrennungsmotors (102),
b) stromabwärts einer Turbinenvorrichtung (122) des Abgasstrangs (114),
c) stromabwärts einer Katalysatorvorrichtung (124) des Abgasstrangs (114),
d) stromabwärts eines Partikelfilters (126) des Abgasstrangs (114) und/oder
e) stromabwärts einer Kühlvorrichtung (134) einer Abgasrückführungsvorrichtung (128) des Verbrennungsmotors (102)
aus dem Abgasstrang (114) abgezweigt wird.

12. Motorvorrichtung (100) nach einem der Ansprüche 1 bis 11, **dadurch gekennzeichnet, dass** das als Treibmedium dienende Abgas
a) stromaufwärts einer Turbinenvorrichtung (122) des Abgasstrangs (114),
b) stromaufwärts einer Katalysatorvorrichtung (124) des Abgasstrangs (114),
c) stromaufwärts eines Partikelfilters (126) des Abgasstrangs (114) und/oder
d) stromaufwärts einer Kühlvorrichtung (134) einer Abgasrückführungsvorrichtung (128) des Verbrennungsmotors (102)
aus dem Abgasstrang (114) abgezweigt wird.

13. Motorvorrichtung (100) nach einem der Ansprüche 1 bis 12, **dadurch gekennzeichnet, dass** die komprimierte Zuluft aus dem Zuluftstrang (112) und das Abgas aus dem Abgasstrang (114) vor der Zuführung zu der Ejektorvorrichtung (110) miteinander vermischt werden.

14. Motorvorrichtung (100) nach einem der Ansprüche 1 bis 13, **dadurch gekennzeichnet, dass** die Motorvorrichtung (100) eine oder mehrere oder sämtliche der folgenden Komponenten umfasst:
- eine Turboladervorrichtung (118), welche insbesondere eine Turbinenvorrichtung (122) und eine Kompressionsvorrichtung (120) umfasst;
- eine Kompressorvorrichtung (120), welche eine Kompressionsvorrichtung (120) umfasst;
- eine Katalysatorvorrichtung (124);
- einen Partikelfilter (126); und/oder
- eine Abgasrückführungsvorrichtung (128).

15. Abscheideverfahren zur Abscheidung von Verunreinigungen aus einem Rohgasstrom, insbesondere zur Abscheidung von Ölnebel aus einem ölnebelhaltigen Blowby-Gasstrom eines Verbrennungsmotors (102), insbesondere unter Verwendung einer Motorvorrichtung (100) nach einem der Ansprüche 1 bis 14, wobei das Abscheideverfahren Folgendes umfasst:
- Zuführen eines Treibmediums zu einer Ejektorvorrichtung (110), wobei wahlweise a) komprimierte Zuluft aus einem Zuluftstrang (112) des Verbrennungsmotors (102), b) Abgas aus einem Abgasstrang (114) des Verbrennungsmotors (102) c) ein Gemisch aus komprimierter Zuluft und Abgas als Treibmedium zu der Ejektorvorrichtung (110) zugeführt wird;
- Absaugen und/oder Ansaugen des Rohgasstroms mittels der Ejektorvorrichtung (110), wobei und/oder wodurch der Rohgasstrom durch einen Abscheidekörper (106) hindurchströmt und Verunreinigungen an und/oder in dem Abscheidekörper (106) abgeschieden werden.

## Claims

1. Engine device (100), comprising a combustion engine (102) and a separating device (104) for separating impurities from a raw gas stream, in particular for separating oil mist from an oil mist-containing blow-by gas stream of the combustion engine (102), wherein the separating device (104) comprises the following:
- at least one separating body (106) for separating the impurities;
- an ejector device (110) for producing a suction effect on an exit side of the at least one separating body (106);
- a supply device (136) for supplying a drive medium to the ejector device (110), wherein, by means of the supply device (136), optionally a) compressed supply air from a supply air tract (112) of the combustion engine (102), b) exhaust gas from an exhaust gas tract (114) of the combustion engine (102), c) a mixture of compressed supply air and exhaust gas is suppliable as drive medium to the ejector device (110).

2. Engine device (100) in accordance with Claim 1, **characterized in that** the supply device (136) comprises a control device (144) which is configured and set up for controlling and/or regulating the supply device (136) in such a way that the drive medium is selectable depending on different operating states of the combustion engine (102), in particular is adjustable with respect to composition and/or volumetric stream.

3. Engine device (100) in accordance with Claim 2, **characterized in that**, by means of the control device (144), it is controllable and/or regulatable due to and/or depending on prevailing pressure differences between a pressure in the supply air tract (112) on the one hand and a pressure in the exhaust gas tract (114) on the other whether and/or with what volumetric stream exhaust gas is supplied as drive medium to the ejector device (110).

4. Engine device (100) in accordance with Claim 3, **characterized in that** the pressure in the supply air tract (112) is a pressure downstream of a compression device (120) of the supply air tract (112).

5. Engine device (100) in accordance with either of Claims 3 or 4, **characterized in that** the pressure in the exhaust gas tract (114) is a pressure downstream of a turbine device (122) and/or downstream of a catalytic device (124) of the exhaust gas tract (114).

6. Engine device (100) in accordance with either of Claims 3 or 4, **characterized in that** the pressure in the exhaust gas tract (114) is a pressure upstream of a turbine device (122) of the exhaust gas tract (114).

7. Engine device (100) in accordance with any one of Claims 1 to 6, **characterized in that** the control device (144) is an active control device (144) which acts actively, in particular in a sensor-controlled manner, electrically, mechanically, and/or pneumatically on a valve device (148) of the supply device (136).

8. Engine device (100) in accordance with any one of Claims 1 to 6, **characterized in that** the control device (144) is a passive control device (144) in which an actuation of the valve device (148) occurs mechanically and immediately due to prevailing pressure levels.

9. Engine device (100) in accordance with any one of Claims 1 to 8, **characterized in that** the control device (144) comprises one or more sensor elements (146), in particular manometers, for providing current measured values, wherein the supply device (136) is regulatable by means of the control device (144) depending on said measured values.

10. Engine device (100) in accordance with any one of Claims 1 to 9, **characterized in that** the separating body (106) is a nonwoven fabric separator (108) or comprises a nonwoven fabric separator (108).

11. Engine device (100) in accordance with any one of Claims 1 to 10, **characterized in that** the exhaust gas serving as drive medium is branched off from the exhaust gas tract (114)
a) downstream of combustion chambers (116) of the combustion engine (102),
b) downstream of a turbine device (122) of the exhaust gas tract (114),
c) downstream of a catalytic device (124) of the exhaust gas tract (114),
d) downstream of a particle filter (126) of the exhaust gas tract (114), and/or
e) downstream of a cooling device (134) of an exhaust gas return device (128) of the combustion engine (102).

12. Engine device (100) in accordance with any one of Claims 1 to 11, **characterized in that** the exhaust gas serving as drive medium is branched off from the exhaust gas tract (114)
a) upstream of a turbine device (122) of the exhaust gas tract (114),
b) upstream of a catalytic device (124) of the exhaust gas tract (114),
c) upstream of a particle filter (126) of the exhaust gas tract (114), and/or
d) upstream of a cooling device (134) of an exhaust gas return device (128) of the combustion engine (102).

13. Engine device (100) in accordance with any one of Claims 1 to 12, **characterized in that** the compressed supply air from the supply air tract (112) and the exhaust gas from the exhaust gas tract (114) are mixed with each other before being supplied to the ejector device (110).

14. Engine device (100) in accordance with any one of Claims 1 to 13, **characterized in that** the engine device (100) comprises one or multiple or all of the following components:
- a turbocharger device (118) which comprises in particular a turbine device (122) and a compression device (120);
- a compressor device (120) which comprises a compression device (120);
- a catalytic device (124);
- a particle filter (126); and/or
- an exhaust gas return device (128).

15. Separation method for separating impurities from a raw gas stream, in particular for separating oil mist from an oil mist-containing blow-by gas stream of a combustion engine (102), in particular using an engine device (100) in accordance with any one of Claims 1 to 14, wherein the separation method comprises the following:
- supplying a drive medium to an ejector device (110), wherein optionally a) compressed supply air from a supply air tract (112) of the combustion engine (102), b) exhaust gas from an exhaust gas tract (114) of the combustion engine (102), c) a mixture of compressed supply air and exhaust gas is supplied as drive medium to the ejector device (110);
- extracting and/or aspirating the raw gas stream by means of the ejector device (110), wherein and/or whereby the raw gas stream flows through a separating body (106) and impurities on and/or in the separating body (106) are separated.

## Revendications

1. Dispositif de moteur (100), comprenant un moteur à combustion interne (102) et un dispositif de séparation (104) servant à séparer des impuretés d'un flux de gaz brut, en particulier servant à séparer un brouillard d'huile d'un flux de gaz de fuite du moteur à combustion interne (102), dans lequel le dispositif de séparation (104) comprend :
- au moins un corps de séparation (106) servant à séparer les impuretés ;
- un dispositif éjecteur (110) servant à générer un effet de succion au niveau d'un côté de sortie de l'au moins un corps de séparation (106) ;
- un dispositif d'amenée (136) servant à amener un agent propulseur vers le dispositif éjecteur (110), dans lequel, au moyen du dispositif d'amenée (136), au choix a) de l'air entrant comprimé issu d'une ligne d'air entrant (112) du moteur à combustion interne (102), b) des gaz d'échappement issus d'une ligne de gaz d'échappement (114) du moteur à combustion interne (102), c) un mélange composé de l'air entrant comprimé et des gaz d'échappement peuvent être amenés en tant qu'agents propulseurs au dispositif éjecteur (110).

2. Dispositif de moteur (100) selon la revendication 1, **caractérisé en ce que** le dispositif d'amenée (136) comprend un dispositif de commande (144), qui est réalisé et mis au point pour commander et/ou réguler le dispositif d'amenée (136) de telle manière que l'agent propulseur peut être choisi en fonction de différents états de fonctionnement du moteur à combustion interne (102), en particulier concernant la composition et/ou le flux volumique.

3. Dispositif de moteur (100) selon la revendication 2, **caractérisé en ce qu'**il est possible de commander et/ou de réguler au moyen du dispositif de commande (144) du fait de et/ou en fonction de différences de pression de mise entre une pression dans la ligne d'air entrant (112) d'une part et une pression dans la ligne de gaz d'échappement (114) d'autre part si des gaz d'échappement sont amenés en tant qu'agents propulseurs au dispositif éjecteur (110) et/ou selon quel flux volumique.

4. Dispositif de moteur (100) selon la revendication 3, **caractérisé en ce que** la pression dans la ligne d'air entrant (112) est une pression en aval d'un dispositif de compression (120) de la ligne d'air entrant (112).

5. Dispositif de moteur (100) selon l'une quelconque des revendications 3 ou 4, **caractérisé en ce que** la pression dans la ligne de gaz d'échappement (114) est une pression en aval d'un dispositif de turbine (122) et/ou en aval d'un dispositif catalyseur (124) de la ligne de gaz d'échappement (114).

6. Dispositif de moteur (100) selon l'une quelconque des revendications 3 ou 4, **caractérisé en ce que** la pression dans la ligne de gaz d'échappement (114) est une pression en amont d'un dispositif de turbine (122) de la ligne de gaz d'échappement (114).

7. Dispositif de moteur (100) selon l'une quelconque des revendications 1 à 6, **caractérisé en ce que** le dispositif de commande (144) est un dispositif de commande (144) actif, qui agit de manière active, en particulier de manière commandée par capteur, de manière électrique, de manière mécanique et/ou pneumatique, sur un dispositif de soupape (148) du dispositif d'amenée (136).

8. Dispositif de moteur (100) selon l'une quelconque des revendications 1 à 6, **caractérisé en ce que** le dispositif de commande (144) est un dispositif de commande (144) passif, dans lequel un actionnement du dispositif de soupape (148) est effectué de manière mécanique ou de manière directe du fait d'un niveau de pression régnant.

9. Dispositif de moteur (100) selon l'une quelconque des revendications 1 à 8, **caractérisé en ce que** le dispositif de commande (144) comprend un ou plusieurs éléments de capteur (146), en particulier des manomètres, servant à fournir des valeurs de mesure instantanées, dans lequel le dispositif d'amenée (136) peut être régulé au moyen du dispositif de commande (144) en fonction desdites valeurs de mesure.

10. Dispositif de moteur (100) selon l'une quelconque des revendications 1 à 9, **caractérisé en ce que** le corps de séparation (106) est un séparateur en non-tissé (108) ou comprend un séparateur en non-tissé (108).

11. Dispositif de moteur (100) selon l'une quelconque des revendications 1 à 10, **caractérisé en ce que** les gaz d'échappement faisant office d'agents propulseurs sont déviés de la ligne de gaz d'échappement (114)
a) en aval de chambres de combustion (116) du moteur à combustion interne (102),
b) en aval d'un dispositif de turbine (122) de la ligne de gaz d'échappement (114),
c) en aval d'un dispositif de catalyseur (124) de la ligne de gaz d'échappement (114),
d) en aval d'un filtre à particules (126) de la ligne de gaz d'échappement (114) et/ou
e) en aval d'un dispositif de refroidissement (134) d'un dispositif de reflux de gaz d'échappement (128) du moteur à combustion interne (102).

12. Dispositif de moteur (100) selon l'une quelconque des revendications 1 à 11, **caractérisé en ce que** les gaz d'échappement faisant office d'agents propulseurs sont déviés de la ligne de gaz d'échappement (114)
a) en amont d'un dispositif de turbine (122) de la ligne de gaz d'échappement (114),
b) en amont d'un dispositif de catalyseur (124) de la ligne de gaz d'échappement (114),
c) en amont d'un filtre à particules (126) de la ligne de gaz d'échappement (114) et/ou
d) en amont d'un dispositif de refroidissement (134) d'un dispositif de reflux de gaz d'échappement (128) du moteur à combustion interne (102).

13. Dispositif de moteur (100) selon l'une quelconque des revendications 1 à 12, **caractérisé en ce que** l'air entrant comprimé issu de la ligne d'air entrant (112) et les gaz d'échappement issus de la ligne de gaz d'échappement (114) sont mélangés les uns aux autres avant d'être amenés au dispositif éjecteur (110).

14. Dispositif de moteur (100) selon l'une quelconque des revendications 1 à 13, **caractérisé en ce que** le dispositif de moteur (100) comprend un ou plusieurs ou tous les composants suivants :
- un dispositif turbocompresseur (118), qui comprend en particulier un dispositif de turbine (122) et un dispositif de compression (120) ;
- un dispositif compresseur (120), qui comprend un dispositif de compression (120) ;
- un dispositif catalyseur (124) ;
- un filtre à particules (126) ; et/ou
- un dispositif de reflux de gaz d'échappement (128).

15. Procédé de séparation servant à séparer des impuretés d'un flux gaz brut, en particulier servant à séparer un brouillard d'huile d'un flux de gaz de fuite contenant le brouillard d'huile d'un moteur à combustion interne (102), en particulier en utilisant un dispositif de moteur (100) selon l'une quelconque des revendications 1 à 14, dans lequel le procédé de séparation comprend :
- l'amenée d'un agent propulseur à un dispositif éjecteur (110), dans lequel au choix a) de l'air entrant comprimé issu d'une ligne d'air entrant (112) du moteur à combustion interne (102), b) des gaz d'échappement issus d'une ligne de gaz d'échappement (114) du moteur à combustion interne (102), c) un mélange composé de l'air entrant comprimé et des gaz d'échappement peuvent être amenés en tant qu'agents propulseurs au dispositif éjecteur (110) ;
- l'évacuation et/ou l'admission par aspiration du flux de gaz brut au moyen du dispositif éjecteur (110), dans lequel et/ou ce qui a pour effet que le flux de gaz brut circule à travers un corps de séparation (106) et les impuretés sont séparées au niveau du et/ou dans le corps de séparation (106).
